(19) Europäisches Patentamt
European Patent Office
Office européen des brevets

(11) **EP 4 144 528 A1**

(12) **EUROPEAN PATENT APPLICATION**

(43) Date of publication:
**08.03.2023 Bulletin 2023/10**

(21) Application number: **21194573.8**

(22) Date of filing: **02.09.2021**

(51) International Patent Classification (IPC):
**B32B 27/08** *(2006.01)*    **B32B 27/18** *(2006.01)*
**B32B 27/32** *(2006.01)*    **C08J 5/18** *(2006.01)*
**C08L 23/06** *(2006.01)*    **C08L 23/08** *(2006.01)*

(52) Cooperative Patent Classification (CPC):
(C-Sets available)
**B32B 27/08; B32B 27/18; B32B 27/32;**
**C08L 23/06; C08L 23/0815;** B32B 2250/02;
B32B 2250/03; B32B 2250/242; B32B 2270/00;
B32B 2307/30; B32B 2307/31; B32B 2307/516;
B32B 2307/54; B32B 2307/558; B32B 2307/72;

(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM**

(71) Applicants:
• **Borealis AG**
**1020 Vienna (AT)**
• **Abu Dhabi Polymers Co. Ltd (Borouge) LLC**
**Abu Dhabi (AE)**

(72) Inventors:
• **Gitsas, Antonios**
**4021 Linz (AT)**
• **BERTHELIER, Anthony**
**92400 Courbevoie (FR)**
• **SEMAAN, Chantal**
**08008 Barcelona (ES)**

(74) Representative: **Kador & Partner PartG mbB**
**Corneliusstraße 15**
**80469 München (DE)**

(54) **POLYETHYLENE BASED SEALANT FILM WITH HIGH PACKAGING PERFORMANCE**

(57) The invention relates to a polyethylene based sealant film comprising an optional outer layer (O), a core layer (C) and an inner layer (I), wherein the core layer (C) is made of a core layer composition comprising a component (AC), being a first, preferably bi- or multimodal, linear low density polyethylene, optionally comprising one or more distinct alpha-olefin comonomers, having a Mw in a range of from 190 kg/ mol to 400 kg/mol and a ratio Mw/Mn in a range of from 11 to 15, and a component (BC) being a second, preferably bi- or multimodal, linear low density polyethylene, optionally comprising one or more distinct alpha-olefin comonomers, having a Mw in a range of from 80 to 115 kg/mol and a ratio Mw/Mn in a range of from 1 to 6; wherein component (AC) has a higher density than component (BC), and component (AC) has a lower $MFR_2$ than component (BC); and wherein said component (AC) is present in said core layer composition in an amount of greater than 50 wt.% based on the total weight of the core layer composition.

The invention further relates to a laminate and an article comprising this film. The invention further relates to the use of the laminate and/or the film for packaging applications.

(52) Cooperative Patent Classification (CPC): (Cont.)
B32B 2307/732; B32B 2307/746; B32B 2439/06;
C08L 2205/025

C-Sets
**C08L 23/06, C08L 23/0815;**
**C08L 23/06, C08L 23/0815, C08L 23/06,**
**C08L 23/0815;**
**C08L 23/0815, C08L 23/06**

**Description**

The present invention relates to a polyethylene based sealant film comprising an optional outer layer (O), a core layer (C) and an inner layer (I), wherein the core layer (C) is made of a core layer composition comprising a first and a second linear low density polyethylene. Furthermore, the invention relates to a laminate comprising the polyethylene based sealant film, and to the use of said laminate or film.

Polyethylene-based laminates are usually prepared from a flexible film structure comprising a polyethylene sealant film adhered to a substrate film, which is commonly made of polyester (PET), biaxially oriented polypropylene (BOPP), or biaxially oriented polyamide (BOPA). Laminates are generally employed to match multi-functional requirements: sealant film is used for sufficient toughness-related properties and to ensure package seal integrity; whereas substrate film is used for stiffness and barrier-related properties to ensure improved shelf life of packed goods and to enable good handling operations during packaging on Form, Fill & Seal (FFS) machines. Coextruded blown films are widely used in a variety of packaging applications and film properties are often subject to the combined effect of the co-extrusion process conditions and polymer compositions selected for the different layers.

Nowadays, there is a trend to provide "100% PE" solutions, i.e. laminates consisting of a polyethylene substrate film laminated to a polyethylene sealant film, since such laminates - being based on a single class of resin - can be easily recycled. This brings huge challenges to the flexible packaging industry, as replacing high performance substrates like BOPET and BOPA by polyethylene substrates, which can run smoothly on the existing high-speed FFS packaging machines, is very challenging. For example, MDO PE substrates often contained in "pure" polyethylene laminates usually have lower heat resistance compared to other PET, BOPP, BOPA substrates and, thus, always tend to have limited process window on the FFS packaging machine. The suitable selection of a sealant film for combination with a substrate film can overcome the above challenges and fulfil the requirements on high-speed packaging applications.

Several approaches have been made to provide such "100% PE" solutions. For example, the international application WO 2020/207940 provides polyethylene based collation shrink films comprising a terpolymer of ethylene and two distinct alpha-olefin comonomers in the core layer. This film is used in packaging applications, however different properties are demanded from a collation shrink film as compared to sealant films for laminate packaging articles, e.g. in terms of mechanical properties such as stiffness etc. The prepared films of WO 2020/207940 do not comprise a core layer being made of a core layer composition comprising a first and a second terpolymer of ethylene and two distinct alpha-olefin comonomers.

Although numerous efforts have been made to explore alternative film designs with well-balanced laminate performance, yet room for improvement remains for the overall laminate design and sealing performance to run on high-speed FFS machines. Thus, there is a steady need to further improve properties of polyethylene laminates and sealant films and to provide film formulations with superior sealing behavior, in addition to the general requirements on the packaging performance of the films such as optical properties, stiffness and other mechanical properties, and in particular to match the performance on FFS packing machines.

Therefore, it is an object of the present invention to provide sealant films and respective laminate films, based on polyethylene polymers, with the above-described properties.

This object is achieved by the present invention, which provides a polyethylene based sealant film comprising an inner layer (I), a core layer (C) and an optional outer layer (O), wherein the core layer (C) is made of a core layer composition comprising

a) a component (AC) being a first, preferably bi- or multimodal, linear low density polyethylene, optionally comprising one or more distinct alpha-olefin comonomers, having a Mw in a range of from 190 kg/mol to 400 kg/mol and a molecular weight distribution (MWD) in a range of from 11 to 15;

b) a component (BC) being a second, preferably bi- or multimodal, linear low density polyethylene, optionally comprising one or more distinct alpha-olefin comonomers, having a Mw in a range of from 80 to 115 kg/mol and a MWD in a range of from 1 to 6;

wherein the component (AC) has a higher density than the component (BC), and the component (AC) has a lower $MFR_2$ than the component (BC); and

wherein component (AC) is present in said core layer composition in an amount of more than 50 wt.% based on the total weight of the core layer composition.

The present invention is based on the finding that such polyethylene based sealant films, which can be used in packaging materials, may be provided by a film comprising a core layer and an inner (sealing) layer, wherein the core layer composition comprises a first and a second linear low density polyethylene as defined above and the inner layer composition comprises an ethylene polymer.

The core layer (C), being comprised of the specified core layer composition, of the polyethylene based sealant films according to the present invention solves the above objects.

Generally, the sealant films and/ or the laminated films according to the present invention are polyethylene-based films, which may easily be recycled. They are characterized by all the physical properties required for packaging applications.

In particular, the design of an enhanced polyethylene based sealant film, in particular of the core layer, allows improving the performance of the packaging line. When using a PET laminated to a polyethylene based sealant film, the core layer of the sealant film is usually based on a standard LLDPE with a low amount of LDPE. By changing to an MDO PE laminated to a polyethylene based sealant film, the standard LLDPE in the core layer of the polyethylene based sealant film shows very limited packaging performance. By adapting the design of the polyethylene based sealant film, especially the core layer thereof, this drawback can be overcome. Accordingly, the polyethylene based sealant films and/ or the laminated polyethylene films according to the present invention may be run on conventional packaging lines at normal (high) speed conditions.

### *Polyethylene Based Sealant Film*

*Structure*

In the present invention, the polyethylene based sealant film comprises, or consists of, an optional outer layer (O), a core layer (C) and an inner layer (I).

Preferably, the polyethylene based sealant film comprises an outer layer (O). If an outer layer (O) is present, the core layer (C) is located between the inner layer (I) and the outer layer (O).

Hence, the polyethylene based sealant film preferably comprises an inner layer (I), an outer layer (O) and a core layer (C). Moreover, the polyethylene based sealant film may comprise one or more further intermediate (or sub-skin) layers (X).

Preferably, the polyethylene based sealant film has a thickness of 40 to 80 $\mu$m, more preferably 45 to 75 $\mu$m and most preferably 50 to 70 $\mu$m.

In the polyethylene based sealant film, the core layer (C) preferably has a thickness of 40 to 80 %, more preferably 45 to 75 % and most preferably 50 to 70 %, of the total film thickness.

The inner layer (I) and/or the outer layer (O) preferably each has/have a thickness of 5 to 30 %, preferably 10 to 30 % and most preferably 15 to 25 %, of the total film thickness.

The expression "polyethylene based sealant film" denotes a film that comprises, or consists of, at least one type of ethylene polymer, which may be a homopolymer, a copolymer or a terpolymer of ethylene. Preferably, the polyolefin film comprises at least 90 wt.%, more preferably at least 95 wt.% and most preferably at least 98 wt.% of ethylene polymer, based on the total weight of the polyethylene film. Preferably, the polyethylene based sealant film comprises from 90 to 100 wt.%, more preferably from 95 to 100 wt.% and most preferably from 98 to 100 wt.% of ethylene polymer, based on the total weight of the polyethylene film. Most preferably, the polyethylene based sealant film consists of only ethylene polymer(s). Preferably, ethylene polymer comprises, or consists of, ethylene homopolymer and/or copolymer and/ or terpolymer of ethylene with propylene and/or any of alpha-olefins having from 4 to 10 carbon atoms. Preferably, the polyethylene based sealant film does not contain non-polyolefin polymers, preferably does not contain non-polyethylene polymers. Use of polyethylene based sealant films enables the provision of fully recyclable and sustainable packaging structures.

The expression "sealant film" denotes a film that comprises a sealing layer, which is a layer that promotes bonding to another film, layer or article. The sealant film has an optional outer layer (O), a core layer (C), and an inner layer (I), and optionally one or more sub-skin layer(s), wherein the inner layer is the sealing layer.

Generally, polyethylene films may be provided as oriented or non-oriented films. An oriented film is a film that has been "stretched" after its production. Oriented films are typically stretched by more than 300%, in the machine direction (MD) and/or longitudinal direction (TD), preferably by 500% and more. Films stretched in machine direction are often referred to as "MDO" films. Films stretched in two directions are referred to as "bi-axially oriented polyethylene" ("BOPE") films. A non-oriented film is a blown or cast film, which is not intentionally stretched after the film production (preferably, by more than 200%) by any suitable means i.e. subsequent heating and/or using the rollers during the film production.

Preferably, the polyethylene based sealant film according to the present invention is a non-oriented film.

As is understood within the meaning of this disclosure, the polyethylene based sealant film and its respective layer compositions for layer preparation may also comprise additives such as stabilizers, processing aids and/or pigments. Examples of such additives are antioxidants, UV stabilizers, acid scavengers, nucleating agents, anti-blocking agents, slip agents etc. as well as polymer processing agents (PPA). The additives may be present in some or only in one layer of the polyethylene film, in the same or in different contents. The core layer composition and optionally the inner layer composition of the sealant comprise(s) a slip agent as defined above. They may also comprise further additives.

Generally, each of the additives may be present in an amount of 0 to 5,000 ppm, based on the total weight of the respective layer composition used for the preparation of the layers of the film. The additives are generally available from several suppliers and are contained in compositions as single additive or as admixtures of two or more additives. Such compositions may generally be present in an amount of 0 to 5 wt.% in the layer composition(s), based on the weight of the respective layer composition used for the preparation of the layers of the film.

Generally, the percentage (%) is to be understood as weight percentage (wt.%) within the meaning of this disclosure, unless otherwise indicated.

*Preparation*

The polyethylene based sealant film according to the present invention is generally prepared by a conventional process, wherein the layers of the film are co-extruded.

The different polymer components in any of the layers of the film are typically intimately mixed prior to layer formation, for example using a twin screw extruder, preferably a counter-rotating extruder or a co-rotating extruder. Then, the blends are converted into a coextruded film.

Generally, the polyethylene based sealant film according to the present invention can be produced by a blown film or cast film process, preferably by a blown film process.

In order to manufacture such polyethylene based sealant films, for example at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown (co-)extrusion can be effected at a temperature in the range 150°C to 230°C, more preferably 160°C to 225°C and cooled by blowing gas (generally air) at a temperature of 10 to 40°C, more preferably 12 to 16°C to provide a frost line height of 0.5 to 4 times, more preferably 1 to 2 times the diameter of the die.

The blow up ratio (BUR) should generally be in the range of 1.5 to 3.5, preferably 2.0 to 3.0, more preferably 2.1 to 2.8.

### Core Layer (C)

The core layer (C) of the ethylene based sealant film is made of a core layer composition, which particularly contributes to mechanical properties of the film necessary for film extrusion and lamination processes.

The core layer (C) is made of a core layer composition comprising a component (AC), which is a first, preferably bi- or multimodal, linear low density polyethylene, optionally comprising one or more distinct alpha-olefin comonomers, having a Mw in a range of from 190 kg/mol to 400 kg/mol and MWD in a range of from 11 to 15 and a component (BC), which is a second, preferably bi- or multimodal, linear low density polyethylene, optionally comprising one or more distinct alpha-olefin comonomers, having a Mw in a range of from 80 to 115 kg/mol and MWD in a range of from 1 to 6.

More specifically, the core layer (C) is made of core layer composition comprising, or consisting of, a component (AC) being a first, preferably bi- or multimodal, linear low density polyethylene, optionally comprising one or more distinct alpha-olefin comonomers, having a Mw in a range of from 190 kg/mol to 400 kg/mol and MWD in a range of from 11 to 15; and a component (BC) being a second, preferably bi- or multimodal, linear low density polyethylene, optionally comprising one or more distinct alpha-olefin comonomers, having a Mw in a range of from 80 to 115 kg/mol and MWD in a range of from 1 to 6; wherein component (AC) has a higher density than component (BC), and component (AC) has a lower $MFR_2$ than component (BC); and wherein said component (AC) is present in said core layer composition in an amount of more than 50 wt.% based on the total weight of the core layer composition.

Preferably, said component (AC) and component (BC) taken together amount to 60 to 100 wt.% of the total weight of the core layer composition.

The core layer composition comprises more than 70 wt.%, more preferably more than 75 wt.% of component (AC) based on the total weight of said core layer composition.

Moreover, the core layer composition preferably comprises less than 30 wt.%, more preferably less than 25 wt.% of component (BC) based on the total weight of said core layer composition.

Preferably, the core layer (C) is made of core layer composition comprising, or consisting of, the component (AC) and component (BC), selected from any of the embodiments as described below.

Component (AC) and component (BC) may be independently selected from linear low density ethylene homopolymers, linear low density ethylene copolymers and linear low density ethylene terpolymers; wherein in the case of copolymers and/ or terpolymers comonomers are selected from the group of alpha-olefin comonomers, preferably from alpha-olefin monomers having from 4 to 12 carbon atoms and, more preferably, from 1-butene, 1-hexene and 1-octene.

Most preferably, the core layer (C) is made of a core layer composition comprising as the component (AC) a first, preferably bi- or multimodal, terpolymer of ethylene and two distinct alpha-olefin comonomers; and/ or as the component (BC) a second, preferably bi- or multimodal, terpolymer of ethylene and two distinct alpha-olefin comonomers.

Further details regarding components (AC) and (BC) are provided herein below.

*Component (AC)*

The core layer composition comprises a component (AC), which is a first, preferably bi- or multimodal, linear low density polyethylene (LLDPE) having a Mw in a range of from 190 kg/ mol to 400 kg/ mol, a MWD in a range of from 11 to 15 and, optionally comprising one or more distinct alpha-olefin comonomers.

Preferably, said component (AC) is multimodal, more preferably bimodal.

Preferably, the component (AC) has a density of from 920 to 940 kg/m$^3$, more preferably of from 928 to 940 kg/m$^3$ and most preferably of from 931 to 940 kg/ m$^3$ determined according to ISO 1183.

Preferably, the component (AC) has a melt flow rate MFR$_2$ of from 0.05 to 2.0 g/10 min, more preferably of from 0.1 to 1.3 g/10 min and most preferably of from 0.1 to 1.0 g/10 min, determined according to ISO 1133.

Preferably, the component (AC) has a melt flow rate MFR$_5$ of from 0.5 to 5.0 g/10 min, more preferably from 0.6 to 4.0 g/10 min and most preferably of from 0.7 to 3.0 g/10 min, determined according to ISO 1133.

Preferably, the component (AC) has a melt flow rate MFR$_{21}$ of from 10.0 to 50.0 g/10 min, more preferably of from 15.0 to 45.0 g/10 min, determined according to ISO 1133.

The component (AC) has a weight average molecular weight (Mw) of from 190 to 400 kg/ mol, preferably of from 200 to 300 kg/ mol.

The component (AC) has a MWD of from 11 to 15, preferably of from 12 to 14.

Preferably, said alpha-olefin comonomers optionally comprised in the LLDPE of component (AC) may be selected independently from alpha-olefin monomers having from 4 to 12 carbon atoms. More preferably, said alpha-olefin monomers are selected independently from 1-butene, 1-hexene and 1-octene.

Most preferably, the component (AC) is a linear low density terpolymer of ethylene, 1-butene and 1-hexene.

In a preferred embodiment, the component (AC) is a multimodal terpolymer of ethylene and two distinct alpha-olefin comonomers (terpolymer I) having an MFR$_5$ of from 0.5 to 5.0 g/10 min, determined according to ISO 1133, and a density of from 928 to 940 kg/m$^3$, determined according to ISO 1183.

Preferably, the terpolymer (I) comprises, or consists of,

a) a low molecular weight polymer which is either a homopolymer of ethylene or a binary copolymer of ethylene and a C4 to C12 alpha-olefin and

b) a high molecular weight polymer which is either a binary copolymer of ethylene and 1-butene, if the low molecular weight polymer of a) is a binary copolymer of ethylene and a C6 to C12 alpha-olefin, or a terpolymer of ethylene, 1-butene and a C6 to C12 alpha-olefin.

Such bimodal ethylene terpolymers are, for example, disclosed in WO03/066698. As far as definitions (such as for the "modality" of a polymer) and production methods for these ethylene terpolymers are concerned, it is referred to WO03/066698. Furthermore, all embodiments and preferred embodiments of such ethylene terpolymers as described in WO03/066698, which have a density in the range of from 928 to 940 kg/m$^3$, are also preferred embodiments of the ethylene terpolymer (I) of the present disclosure, whether or not explicitly described herein.

Preferably, the terpolymer (I) has a density in the range of from 928 to 940 kg/m$^3$, more preferably from 930 to 940 kg/m$^3$.

Preferably, the C4 to C12 alpha-olefin of the low molecular weight copolymer fraction is selected from the group consisting of 1-butene, 1-hexene, 4-methyl-1-pentene, 1-octene and 1-decene.

Furthermore, preferably the C6 to C12 alpha-olefin of the high molecular weight copolymer fraction is preferably selected from the group consisting of 1-hexene, 4-methyl-1-pentene, 1-octene and 1-decene.

Preferably, the terpolymer (I) comprises, or consists of, a) a low molecular weight homopolymer of ethylene and b) a high molecular weight terpolymer of ethylene, 1-butene and a C6 to C12 alpha-olefin, preferably a high molecular weight terpolymer of ethylene, 1-butene and 1-hexene.

The weight average molecular weight of the terpolymer (I) is preferably between 190,000 to 400,000 g/mol, more preferably between 200,000 to 300,000 g/mol. The low molecular weight polymer fraction has a weight average molecular weight preferably of from 4,500 to 55,000 g/mol, more preferably of from 5,000 to 50,000 g/mol, and the high molecular weight polymer has a weight average molecular weight preferably of from 450,000 to 1,000,000 g/mol, more preferably of from 500,000 to 1,000,000 g/mol.

The terpolymer (I) preferably has a melt flow rate MFR$_2$ of from 0.05 to 2.0 g/10 min, more preferably from 0.1 to 1.3 g/10 min and most preferably from 0.1 to 1.0 g/10 min.

The terpolymer (I) preferably has a melt flow rate MFR$_5$ of from 0.6 to 4.0 g/10 min, more preferably from 0.7 to 3.0 g/10 min.

The terpolymer (I) preferably has a melt flow rate MFR$_{21}$ of from 10.0 to 50.0 g/10 min, more preferably from 15.0 to 45.0 g/10 min.

The low molecular weight polymer fraction of the terpolymer (I) preferably has a melt flow rate MFR$_2$ of from 200.0 to 800.0 g/10 min, more preferably from 300.0 to 600.0 g/10 min.

The terpolymer (I) preferably comprises from 30 to 60 wt.%, more preferably from 35 to 50 wt.% and most preferably from 38 to 45 wt.% of the low molecular weight polymer fraction, the remainder being preferably the high molecular weight polymer fraction.

The overall comonomer content in the total terpolymer (I) is preferably from 1 to 7 mol%, more preferably from 2 to 6 mol%.

Preferably, in the low molecular weight polymer the comonomer content is from 0 to 2.5 mol%, more preferably from 0 to 2 mol%. In the high molecular weight polymer the comonomer content is preferably from 2.5 to 11 mol%, more preferably from 3 to 10 mol%.

In the embodiments, wherein the terpolymer (I) comprises, or consists of, a) a low molecular weight homopolymer of ethylene and b) a high molecular weight terpolymer of ethylene, 1-butene and 1-hexene, it is preferred that the content of 1-butene in the final polymer is from 1.0 to 2.0 wt.% and the content of 1-hexene is from 4.0 to 6.0 wt.%.

Preferably, the terpolymer (I) has a viscosity $\eta$ measured at 0.05 rad/s of from 10,000 to 65,000 Pa·s, more preferably from 15,000 to 60,000 Pa·s, and most preferably from 20,000 to 55,000 Pa·s.

As the multimodal terpolymer (I) of component (AC), a commercially available product BorShape™, such as BorShape™ FX1001 or BorShape™ FX1002, from Borealis may be used.

FX1001 is a bimodal LLDPE terpolymer. The low molecular weight fraction is a homopolymer of ethylene having an MFR$_2$ of 400.0 g/10 min, preferably produced in a loop reactor. In the high molecular weight fraction, preferably produced in a gas phase reactor, ethylene is co-polymerized with 1-butene and 1-hexene as comonomers. The density of the final resin is 931 kg/m$^3$ and the MFR$_5$ is 0.85 g/10 min. The split (LMW/HMW) is 39/61. FX1001 has an M$_w$/M$_n$ (also referred to as MWD) of about 14 (from 13 to 15). The content of 1-butene in the final polymer is 1.5 wt.% and the content of 1-hexene is 5.5 wt.%. The viscosity $\eta$, measured at 0.05 rad/s, is 52000 (+/-5000) Pa·s.

FX1002 is a bimodal MDPE terpolymer. The low molecular weight fraction is a homopolymer of ethylene having an MFR$_2$ of 400.0 g/10 min, preferably produced in a loop reactor. In the high molecular weight fraction, preferably produced in a gas phase reactor, ethylene is co-polymerized with 1-butene and 1-hexene as comonomers. The density of the final resin is 937 kg/m$^3$, the MFR$_5$ is 2.0 g/10 min and the MFR$_{21}$ is 42.0 g/10 min. The split (LMW/HMW) is 43/57. FX1002 has an M$_w$/M$_n$ (also referred to as MWD) of about 12 (from 11 to 13). The content of 1-butene in the final polymer is 1.5 wt.% and the content of 1-hexene is 4.5 wt.%. The viscosity $\eta$, measured at 0.05 rad/s, is 23000 (+/-3000) Pa·s.

Preferably, the component (AC) is present in an amount of more than 50 wt.%, more preferably more than 70 wt.% and most preferably more than 75 wt.%, in the core layer composition, based on the total weight of the core layer composition.

Preferably, the component (AC) is present in an amount of 51 to 95 wt.% and more preferably 71 to 90 wt.%, in the core layer composition, based on the total weight of the core layer composition.

*Component (BC)*

The core layer (C) further comprises a component (BC), which is a second, preferably bi- or multimodal, linear low density polyethylene, optionally comprising one or more distinct alpha-olefin comonomers, having a Mw in a range of from 80 to 115 kg/mol and a ratio Mw/ Mn (MWD) in a range of from 1 to 6.

Preferably, said component (BC) is multimodal, more preferably bimodal.

Preferably, the component (BC) has a density of from 910 to 925 kg/m$^3$, more preferably of from 913 to 922 kg/m$^3$ and most preferably of from 915 to 920 kg/ m$^3$ determined according to ISO 1183.

Preferably, the component (BC) has a melt flow rate MFR$_2$ of from 0.5 to 2.0 g/10 min, more preferably of from 0.6 to 2.0 g/10 min and most preferably of from 1.2 to 1.8 g/10 min, determined according to ISO 1133.

Preferably, the component (BC) has a melt flow rate MFR$_5$ of from 3.0 to 5.0 g/10 min determined according to ISO 1133.

Preferably, the component (BC) has a melt flow rate MFR$_{21}$ of from 10.0 to 50.0 g/10 min, more preferably of from 15.0 to 45.0 g/10 min, most preferably of from 20.0 to 40.0 g/10 min determined according to ISO 1133.

The component (BC) has a weight average molecular weight (Mw) of from 80 to 115 kg/ mol.

Preferably, the component (BC) has a number average molecular weight (Mn) of from 15 to 25 kg/ mol.

The component (BC) has MWD of from 1 to 6, preferably of from 3 to 5.

Preferably, said alpha-olefin comonomers optionally comprised in the LLDPE of component (BC) may be selected independently from alpha-olefin monomers having from 4 to 12 carbon atoms. More preferably, said alpha-olefin monomers are selected independently from 1-butene, 1-hexene and 1-octene.

Most preferably, the component (BC) is a linear low density terpolymer of ethylene, 1-butene and 1-hexene.

Preferably, component (BC) is a terpolymer (II) of ethylene and two distinct alpha-olefin monomers, preferably a multimodal ethylene terpolymer, preferably having a density of from 910 $kg/m^3$ to 925 $kg/m^3$ and/or an $MFR_2$ of from 0.5 to 2.0 g/10 min.

Preferably, said alpha-olefin comonomers comprised in component (BC) may be selected independently from alpha-olefin monomers having from 4 to 10 carbon atoms. More preferably, said alpha-olefin monomers are selected independently from 1-butene, 1-hexene and 1-octene. Most preferably, the component (BC) is a terpolymer of ethylene, 1-butene and 1-hexene.

Preferably, the ethylene terpolymer (II) has a ratio $MFR_{21}/MFR_2$ of from 13 to 30 and an MWD (molecular weight distribution; also described by the ratio Mw/Mn) in a range of from 1 to 6.

Preferably, the ethylene terpolymer (II) comprises, or consists of, a multimodal polymer of ethylene with two comonomers selected from alpha-olefins having from 4 to 10 carbon atoms, which has a ratio $MFR_{21}/MFR_2$ of from 13 to 30 and an MWD of from 1 to 6, preferably from 3 to 5.

Such multimodal ethylene terpolymers are disclosed, for example, in WO2016/083208.

The multimodal ethylene terpolymer (II) preferably has an $MFR_2$ of from 0.6 to 2.0 g/10 min, and particularly preferred from 1.2 to 1.8 g/10 min.

The multimodal ethylene terpolymer (II) has a density of from 910 to 925 $kg/m^3$, more preferably of from 913 to 922 $kg/m^3$, and particularly preferred of from 915 to 920 $kg/m^3$.

The multimodal ethylene terpolymer (II) preferably has a ratio $MFR_{21}/MFR_2$ of from 13 to 30, more preferably from 15 to 25.

The multimodal ethylene terpolymer preferably has an MWD in a range of from 1 to 6, more preferably of from 3 to 5.

The alpha-olefin comonomers having from 4 to 10 carbon atoms of the multimodal ethylene terpolymer (II) may be independently selected from 1-butene, 1-hexene and 1-octene. Preferably 1-butene and/or 1-hexene.

Preferably, the total amount of comonomers present in the multimodal ethylene terpolymer (II) is from 0.5 to 10 mol%, preferably from 1 to 8 mol%, more preferably from 1 to 5 mol%, still more preferably from 1.5 to 5 mol% and most preferably from 2.5 to 4 mol%.

In a preferred embodiment, the multimodal ethylene terpolymer (II) is a bimodal terpolymer, i.e. it comprises a low molecular weight and a high molecular weight component, and has an $MFR_2$ of from 1.2 to 1.8 g/10 min, and/or an $MFR_5$ of from 3.0 to 5.0 g/10 min, and/or an $MFR_{21}$ of from 20.0 to 40.0 g/10 min, and/or a density of from 915 to 920 $kg/m^3$, and/or a molecular weight distribution (MWD) of from 3 to 5, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25, and/or an MFR21/MFR5 ratio ($FRR_{21/5}$) of from 6 to 9.

In a further preferred embodiment, the ethylene terpolymer of component (BC) comprises, or consists of, a multimodal ethylene terpolymer, more preferably a bimodal ethylene terpolymer (II).

Preferably, the multimodal ethylene terpolymer (II) is an ethylene terpolymer having a density of from 910 $kg/m^3$ to 925 $kg/m^3$ and an $MFR_2$ of from 0.5 to 2.0 g/10 min.

The multimodal ethylene terpolymer (II) preferably comprises, or consists of, a multimodal polymer of ethylene with at least two different comonomers selected from alpha-olefins having from 4 to 10 carbon atoms, which has a ratio $MFR_{21}/MFR_2$ of from 13 to 30 and an MWD in a range of from 3 to 5.

Such multimodal ethylene terpolymers are disclosed, for example, in WO2016/083208. As far as definitions (such as for the "modality" of a polymer) and production methods for these ethylene terpolymers are concerned, it is referred to WO2016/083208. Furthermore, all embodiments and preferred embodiments of such ethylene terpolymers as described in WO2016/083208, which have a density in the range of from 910 to 925 $kg/m^3$ are also preferred embodiments of the multimodal ethylene terpolymer (II) in the present disclosure, whether or not explicitly described herein.

The multimodal ethylene terpolymer (II) preferably has an $MFR_2$ of from 0.6 to 2.0 g/10 min, and particularly preferred from 1.2 to 1.8 g/10 min.

Preferably, the multimodal ethylene terpolymer (II) has a density of from 910 to 925 $kg/m^3$, more preferably from 913 to 922 $kg/m^3$, and particularly preferred from 915 to 920 $kg/m^3$.

The multimodal ethylene terpolymer (II) preferably has a ratio $MFR_{21}/MFR_2$ of from 13 to 30, more preferably from 15 to 25.

The at least two alpha-olefin comonomers having from 4 to 10 carbon atoms of the multimodal ethylene terpolymer (II) are preferably 1-butene and 1-hexene.

Preferably, the total amount of comonomers present in the multimodal ethylene terpolymer (II) is from 0.5 to 10 mol%, more preferably from 1 to 8 mol%, even more preferably from 1 to 5 mol%, still preferably from 1.5 to 5 mol% and most preferably from 2.5 to 4 mol%.

The multimodal ethylene terpolymer (II), which preferably is a bimodal terpolymer, preferably comprises, or consists of, an ethylene polymer component (IIA) and an ethylene polymer component (IIB), wherein the ethylene polymer component (IIA) has higher $MFR_2$ than the ethylene polymer component (IIB).

Preferably, the ethylene polymer component (IIA) has an $MFR_2$ of from 1.0 to 50.0 g/10 min, more preferably from 1.0 to 40.0 g/10 min, even more preferably from 1.0 to 30.0 g/10 min, still more preferably from 2.0 to 20.0 g/10 min, still more preferably from 2.0 to 15.0 g/10 min and most preferably from 2.0 to 10.0 g/10 min.

The ratio of the $MFR_2$ of ethylene polymer component (IIA) to the $MFR_2$ of the ethylene polymer component (IIB) is from 2 to 50, preferably from 5 to 40, more preferably from 10 to 30, even more preferably from 10 to 25 and most preferably from 11 to 25.

Preferably, the ethylene polymer component (IIA) comprises a different comonomer than the ethylene polymer component (IIB).

Preferably, the ethylene polymer component (IIA) has lower amount (mol%) of comonomer than the ethylene polymer component (IIB), more preferably, the ratio of [the amount (mol%) of the alpha-olefin comonomer having from 4 to 10 carbon atoms comonomer present in ethylene polymer component (IIA)] to [the amount (mol%) of at least two alpha-olefin comonomers having from 4 to 10 carbon atoms of the final multimodal ethylene terpolymer] is of from 0.10 to 0.60, preferably from 0.15 to 0.50.

Preferably, the alpha-olefin comonomer having from 4 to 10 carbon atoms of the ethylene polymer component (IIA) is 1-butene and the alpha-olefin comonomer having from 4 to 10 carbon atoms of the ethylene polymer component (IIB) is 1-hexene.

Preferably, the ethylene polymer component (IIA) has different, preferably higher, density than the density of the ethylene polymer component (IIB).

The density of the ethylene polymer component (IIA) is preferably from 925 to 950 kg/m$^3$, more preferably from 930 to 945 kg/m$^3$.

Preferably, the multimodal ethylene terpolymer (II) comprises the ethylene polymer component (IIA) in an amount of from 30 to 70 wt.%, more preferably from 40 to 60 wt.%, even more preferably from 35 to 50 wt.%, still more preferably from 40 to 50 wt.%; and the ethylene polymer component (IIB) in an amount of from 70 to 30 wt.%, more preferably from 60 to 40 wt.%, even more preferably from 50 to 65 wt.%, still more preferably from 50 to 60 wt.%, based on the total amount (100 wt.%) of the multimodal ethylene terpolymer (II).

Most preferably, the multimodal ethylene terpolymer (II) consists of the ethylene polymer components (IIA) and (IIB) as the sole polymer components. Accordingly, the split between the ethylene polymer component (IIA) to the ethylene polymer component (IIB) is (30 to 70):(70 to 30) preferably (40 to 60):(60 to 40), more preferably (35 to 50):(65 to 50), still more preferably (40 to 50):(50 to 60).

In a particularly preferred embodiment, the multimodal ethylene terpolymer (II) is a bimodal terpolymer, i.e. comprises a low molecular weight and a high molecular weight component, and has an $MFR_2$ of from 1.2 to 1.8 g/10 min, and/or an $MFR_5$ of from 3.0 to 5.0 g/10 min, and/or an $MFR_{21}$ of from 20.0 to 40.0 g/10 min, and/or a density of from 915 to 920 kg/m$^3$, and/or a molecular weight distribution (MWD) of from 3.0 to 5.0, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25, and/or an $MFR_{21}/MFR_5$ ratio ($FRR_{21/5}$) of from 6 to 9.

Preferred as the multimodal ethylene terpolymers (II) are also commercially available products such as Anteo™ from Borealis or Borouge having the properties as required herein, especially Anteo™ FK1828 or Anteo™ FK1820.

Preferably, the component (BC) is present in an amount of less than 30 wt.%, more preferably less than 25 wt.%, in the core layer composition, based on the total weight of the core layer composition.

Preferably, the component (BC) is present in an amount of from 5 to 29 wt.% and more preferably 10 to 24 wt.%, in the core layer composition, based on the total weight of the core layer composition.

*Additives*

According to the invention, the core layer composition may further comprise additives.

Additives include, for example, a slip agent and/ or an anti-block agent.

As per definition, a slip agent is an additive that changes the slip properties between films and between the film and converting equipment.

Preferably, the slip agent is present in the core layer composition in an amount of from 50 to 5000 ppm, more preferably from 100 to 4000 ppm, even more preferably from 300 to 3000 ppm and most preferably from 400 to 2000 ppm, based on the total weight of the core layer composition.

Preferably, the slip agent comprises a compound selected from the group consisting of fatty acid amides, such as erucamide, oleamide or stearamide, and combinations thereof.

In one embodiment, the core layer comprises from 300 to 3000 ppm erucamide.

In one embodiment, the core layer composition comprises an anti-block agent. As per definition, an anti-block agent assists in minimizing surfaces from interacting with one another either through adhesion or other forces.

The anti-block agent may be present in the core layer composition in an amount of from 50 to 5000 ppm, preferably from 100 to 4000 ppm, more preferably from 300 to 3000 ppm, based on the total weight of the core layer composition.

Preferably, the anti-block agent comprises a compound selected from the group consisting of inorganic compounds such as talc, kaolin, cristobalite, natural silica and synthetic silica, diatomaceous earth, mica, calcium carbonate, calcium sulfate, magnesium carbonate, magnesium sulfate, and feldspars, and combinations thereof.

The slip agent and optionally anti-block agent may be added to the core layer composition during preparation of the composition or may already be contained in any of the polymers used.

The slip agent and optionally anti-block agent may be added as pure compounds or as (e.g. commercially available) compositions including one or more of these agents, such as Polybatch FSU-105-E or Polybatch CE505E (provided by A. Schulman).

The core layer composition may comprise further additives as described further below.

### Inner Layer (I)

The inner layer (I), which is the sealing layer of the sealant film, is an external layer of the film, and it is made of an inner layer composition comprising components, which particularly contribute to heat and sealing properties.

Preferably the inner layer (I) is made of an inner layer composition comprising a component (AI) being a third linear low density polymer of ethylene (LLDPE) and, optionally, one or more alpha-olefin comonomer(s) having a $MFR_2$ in the range of from 0.5 to 2.0 g/10 min determined according to ISO 1133, a density in the range of from 910 to 925 kg/m$^3$ and, preferably a molecular weight distribution (MWD) of from 1 to 6; and a component (BI) being a fourth low density polymer of ethylene (LDPE) and, optionally, one or more alpha-olefin comonomer(s) having a $MFR_2$ in a range of from 0.1 to 2.5 g/10 min determined according to ISO 1133, a density in a range of from 910 to 930 kg/m$^3$ and, preferably, a molecular weight distribution (MWD) of from 5 to 8.

### Component (AI)

The inner layer (I) is made of an inner layer composition comprising a component (AI).

All embodiments described for the component (BC) are embodiments of the component (AI). The component (AI) may be selected from anyone of these embodiments independently, and the selected embodiment may be the same or different for (AI) and (BC).

Component (AI) is present in an amount of more than 50 wt.%, preferably of more than 70 wt.%, and more preferably of more than 75 wt.%, in the inner layer composition, based on the total weight of the inner layer composition.

Preferably, the component (AI) is present in an amount of from 51 to 95 wt.%, more preferably from 65 to 90 wt.% and most preferably from 75 to 85 wt.%, in the inner layer composition, based on the total weigh of the inner layer composition.

In addition to the component (AI), the inner layer composition may comprise further components, which are different from the component (AI).

### Component (BI)

The inner layer composition may further comprise a component (BI). Preferably, the component (BI) is a low density polyethylene (LDPE). LDPEs are well known in the art and are produced in high pressure process usually performed in a tubular reactor or an autoclave.

LDPEs and their production are, for example, described in WO 2017/055174, page 9, line 29 to page 12, line 6, to which it is referred.

The LDPE of component BI preferably has a density of 920 to 928 kg/m$^3$, more preferably of 920 to 925 kg/m$^3$.

Preferably, the LDPE of component BI has a $MFR_2$ of 0.2 to 2.0 g/10min, more preferably of 0.4 to 1.5 g/10min, and most preferably of 0.5 to 1.0 g/10min.

In a particularly preferred embodiment, the LDPE of component BI has a $MFR_2$ of 0.5 to 1.0, and/or a density of 920 to 925 kg/m$^3$, and/or a MWD of 5 to 8, and/or $M_n$ of 12 to 18 kg/mol, and/or a Mw of 85 to 130 kg/mol.

All molecular weight parameters of LDPE are measured by GPC viscosity method as further described in detail below.

As LDPE of component BI, resin FT5230 as produced by Borealis may be used.

Preferably, the component (BI) is present in an amount of from 5 to 30 wt.%, more preferably from 10 to 25 wt.%, in the inner layer composition, based on the total weight of the inner layer composition.

*Additives*

The inner layer composition may comprise a slip agent and/or an anti-block agent. For the compounds, contents and further features of the additives, it is referred to the respective description of additives of the core layer composition. The embodiments concerning the additives of the core layer composition are also embodiments of the inner layer composition.

In one embodiment, the inner layer composition comprises a slip agent in an amount of from 50 to 5000 ppm and/or an anti-block agent in an amount of from 50 to 5000 ppm, each being based on the total weight of the inner layer composition.

***Outer Layer (O)***

The optional outer layer (O) is an external layer of the film, and it comprises components, which particularly contribute to heat resistance and optical properties of the film.

Preferably, an outer layer (O) is present in the PE based sealant film.

The outer layer (O), if present, is preferably the layer used for lamination to a substrate.

The outer layer (O) is made of an outer layer composition, which may comprise one or more components.

Preferably, the outer layer composition is different from the inner layer composition.

*Component (AO)*

Preferably, the outer layer composition comprises a component (AO).

All embodiments described for the component (AC) are embodiments of the component (AO). The component (AO) may be selected from anyone of these embodiments independently, and the selected embodiment may be the same or different for (AO) and (AC).

Preferably, the component (AO) is present in an amount of 70 to 95 wt.%, more preferably 80 to 95 wt.%, in the outer layer composition, based on the total weight of the outer layer composition.

*Component (BO)*

Preferably, the outer layer composition further comprises a component (BO).

All embodiments described for the component (BC) are embodiments of the component (BO). The component (BO) may be selected from anyone of these embodiments independently, and the selected embodiment may be the same or different for (BO) and (BC).

Preferably, component (BO) is present in an amount of from 5 to 25 wt.%, more preferably from 10 to 22 wt.%, in the outer layer composition, based on the total weight of the outer layer composition.

If both components (AO) and (BO) are present in the outer layer composition, the weight ratio of (AO) : (BO) is preferably from 95 : 5 to 80 : 20.

***Laminate & Article***

The invention further relates to a laminated polyethylene film comprising the polyolefin sealant film according to the present invention. The laminated polyethylene film is a polyethylene film as defined for the expression "polyethylene based sealant film" above.

A laminated polyethylene film may be obtained by laminating the polyethylene based sealant film according to the present invention to another film, such as a substrate film. This may be affected in any conventional lamination device using conventional lamination methods, such as adhesive lamination, including both solvent-based and solvent-less adhesive lamination using any conventional, commercially available adhesive. Lamination may alternatively be carried out without any adhesive, as sandwich lamination with or without a melt web, which may be pressed between the substrates. Such melt web may be any conventional melt web material based on polyethylene, such as LDPE. Lamination may further be performed via extrusion coating technique. All these lamination methods are well known in the art and described in literature.

The polyethylene based sealant film is laminated to a substrate film, preferably via the core layer (C) of the polyethylene based sealant film or via the optional outer layer (O) of the polyethylene based sealant film. Thus, the laminated polyethylene film comprises or preferably consists of the polyethylene based sealant film according to the present invention and a substrate film, and optionally an adhesive layer.

The expression "substrate film" denotes a film that is used to provide physical stability (such as stiffness) to another film, e.g. if laminated to this film such as a sealant film. The substrate film may be produced by a blown film or cast film process as described above for the polyethylene based sealant film. The substrate film may be an oriented or a non-oriented film, orientation of films being as defined above. Preferably, the substrate film is an oriented film, preferably an uniaxially oriented film, such as a machine direction-oriented (MDO) film.

Preferably, the substrate film is also a polyethylene film as defined for the expression "polyethylene based sealant film" above. Use of laminated polyethylene films with high contents of polyethylene enables the provision of fully recyclable and sustainable packaging structures.

*Properties*

The laminated polyethylene film according to the invention has an excellent coefficient of friction (CoF). The coefficient of friction is important for maintaining good packaging performance (on FFS machines), particularly for high-speed packaging.

Preferably, the laminated polyethylene film has a dynamic coefficient of friction after 7 days of up to 0.30, more preferably up to 0.20. Preferably, the laminated polyethylene film has a dynamic coefficient of friction after 7 days of from 0.05 to 0.30.

Preferably, the laminated polyethylene film has a dynamic coefficient of friction after 1 day of up to 0.30, more preferably up to 0.20. Preferably, the laminated polyethylene film has a dynamic coefficient of friction after 1 day of from 0.05 to 0.30. Preferably, the dynamic coefficient of friction does not change by more than 15% after 7 days.

The dynamic coefficient of friction (CoF) is determined according to ASTM D1894.

The laminated polyethylene film according to the invention has an improved seal initiation temperature (SIT).

Preferably, the laminated polyethylene film has a seal initiation temperature (5 N) of less than 95 °C, more preferably of less than 90.5 °C. Also preferably the laminated polyethylene film has a seal initiation temperature (5 N) of more than 70 °C, more preferably more than 75 °C. The seal initiation temperature (SIT) is determined according to ASTM F 2029 and ASTM F 88, preferably at the sealing layer of the laminated polyethylene film.

The laminated polyethylene film of the invention has a good stiffness.

Preferably, the laminated polyethylene film of the invention has a tensile modulus in machine direction (MD) (1% secant), determined according to ISO 527-3, of 250 MPa or more, such as 300 MPa or more. Preferably, the MD tensile modulus is in a range of from 500 MPa to 800 MPa.

If higher stiffness is desired, it is preferred that the core layer comprises a higher content of component (AC).

The laminated polyethylene film preferably has a dart drop impact (DDI) of at least 300 g, more preferably at least 350 g, such as at least 365 g, determined according to ASTM D1709, Method A.

Preferably, the laminated polyethylene film has a thickness of 70 to 100 $\mu$m and more preferably 80 to 90 $\mu$m.

The invention further relates to an article comprising the polyethylene based sealant film according to the present invention and/or the laminated polyethylene film according to the present invention. Preferred articles are packaging articles such as pouches, like stand up pouches, sacks, bag, sachets, lamitubes etc.

**Use**

The invention further relates to the use of the polyethylene based sealant film according to the present invention and/or the laminated polyethylene film according to the present invention for packaging of an article. Particularly, they may be used in form, fill and seal packaging technology or in the formation of pouches, such as stand up pouches, sacks, bags, sachets or lamitubes.

Any one of the embodiments of the invention described herein can be combined with one or more of these embodiments. Particularly, any embodiment described for the sealant film of the invention is applicable to the laminated film, the article and to the use of the sealant film or the laminated film.

In the following, the invention will be further illustrated by way of examples.

**Measurement and Determination Methods**

The following definitions of terms and measurement and determination methods apply to the above general description of the invention as well as to the below examples. Unless otherwise indicated, the measurements of film properties were performed on sealant films with a thickness of 60 $\mu$m and laminated films with a thickness of 80 to 90 $\mu$m.

**a)** Melt Flow Rate MFR

The melt flow rate (MFR) was determined according to ISO 1133 and was indicated in g/10 min. The higher the melt flow rate, the lower the viscosity of the polymer. The MFR is determined at 190 °C for polyethylene and at 230 °C for polypropylene, at a loading of 2.16 kg ($MFR_2$), 5.00 kg ($MFR_5$) or 21.6 kg ($MFR_{21}$).

The quantity FRR ((melt) flow rate ratio) is an indication of molecular weight distribution and denotes the ratio of flow rates at different loadings. Thus, $FRR_{21/5}$ denotes the value of $MFR_{21}/MFR_5$ and $FRR_{21/2}$ denotes the value of $MFR_{21}/MFR_2$.

**b)** Density

Density of the polymer was measured according to ISO 1183-1:2004 (method A) on compression molded specimen prepared according to EN ISO 1872-2 (Feb 2007) and is given in $kg/m^3$.

**c)** GPC

*(1) GPC conventional method*

Unless otherwise indicated, the GPC conventional method is used for the measurement of ethylene polymers - except for LDPE.

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were generally determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \times M_i)}{\sum_{i=1}^{N} A_i} \quad (2)$$

$$M_z = \frac{\sum_{i=1}^{N} (A_i \times M_i^2)}{\sum_{i=1}^{N} (A_i \times M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain)) or differential refractometer ((RI) from Agilent Technologies, equipped with 3 x Agilent-PLgel Olexis and 1x Agilent-PLgel Olexis Guard columns) was used. As mobile phase 1,2,4-trichlorobenzene (TCB) stabilized with 250 mg/L 2,6-Di tert-butyl-4-methylphenol) was used. The chromatographic system was operated at column temperature of 160°C and detector at 160°C and at a constant flow rate of 1 mL/min. 200 μL of sample solution was injected per analysis. Data collection was performed using either Agilent Cirrus software version 3.3 or PolymerChar GPC-IR control software.

The column set was calibrated using 19 narrow MWD polystyrene (PS) standards in the range of from 0.5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

A third order polynomial fit was used to fit the calibration data.

All samples were prepared in the concentration range of around 1 mg/ml and dissolved at 160°C for 3 (three) hours for PE in fresh distilled TCB stabilized with 250 ppm Irgafos168 under continuous gentle shaking.

*(2) GPC viscosity method*

Molecular weight averages ($M_z$, $M_w$ and $M_n$), molecular weight distribution (MWD) of LDPE is measured by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160°C and at a constant flow rate of 1 mL/min was applied. 200 μL of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm$^3$/g.

The column set was calibrated using universal calibration (according to ISO 16014-2:2019) with at least 15 narrow MWD polystyrene (PS) standards in the range of 0.5 kg/mol to 11600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$\log M_1[\eta_1] = V_R = \log M_2[\eta_2]$$

with:

$M_1$ Molar mass of PS
$\eta_1$ intrinsic viscosity of the PS
$M_2$ Molar mass of sample
$\eta_2$ intrinsic viscosity of sample
$V_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160°C) of stabilized TCB (same as mobile phase) for 2.5 hours for PP or 3 hours for PE at max. 160°C under continuous gentle shaking.

**d)** Comonomer Content

The comonomer content was determined as described in WO2019081611, pages 31 to 34.

**e)** Coefficient of friction

The dynamic Coefficient of Friction (CoF) as a measure of the frictional behavior of the laminated film was determined using a method according to ISO 8295:1995 and ASTM D1894-11. It may be measured on outer or inner layers of the film, preferably, it is measured on the inner layers of the film.

The apparatus was similar as shown in Figure 1(c) of ASTM D1894. Three samples of size 210x297 mm were cut in machine direction from the coated material and they were thermostated at 23 °C for at least 16 hours. The test was also conducted at this temperature. The sample was fastened to the table so that the machine direction of the sample coincides with the direction in which the sled moves during the test. An aluminum foil having a size of 65x140 mm was fastened to the sled. The foil was inspected to see that it was free of wrinkles. The weight of the sled (including the foil) was 200 grams $\pm$2 grams. The sled was connected to the load cell of Instron universal testing machine as shown in Figure 1(c) of ASTM D1894. The sled was then pulled with a constant speed (100 mm/min) along the table. The recording from the load cell was then collected over time. An average force that was required to keep the sled moving, i.e., the dynamic friction force Ff was then determined as described in paragraph 9.2 of ISO 8295:1995. The dynamic coefficient of friction was then calculated as described in ISO 8295:1995, i.e. CoF= Ff / w·g, where Ff is the dynamic friction force in N, w is the weight of the sled in kg and g is the gravitational constant 9.81 m/s$^2$. Three replicate runs were conducted. If any information were missing from the abovementioned description then the information given in ISO 8295:1995 should be used for experimental conditions and ASTM D1894, Figure 1 and paragraph 5 for the apparatus.

**f)** Seal initiation temperature (SIT)

The seal initiation temperature (SIT) at 5 N force and the maximum seal force were determined according to ASTM F2029 and ASTM F88.

The method determines the sealing temperature range (sealing range) of polyethylene films, in particular blown films or cast films. The sealing temperature range is the temperature range, in which the films can be sealed according to conditions given below. The lower limit (heat sealing initiation temperature (SIT)) is the sealing temperature at which a sealing strength of 5+/-0.5 N is achieved. The upper limit (sealing end temperature (SET)) is reached, when the films stick to the sealing device. The sealing range was determined on a J&B Universal Sealing Machine Type 4000 with a 60 $\mu$m thickness film produced on a three-layer cast film co-extrusion line as described below with the following further parameters:

Conditioning time: > 96 h

Sealing jaws dimension: 50x5 mm

Sealing temperature: ambient - 240°C

Sealing temperature interval: 5°C

Sealing time: 1 sec

Delay time: 30 sec

Sealing pressure: 0,4 N/mm$^2$ (PE);

Grip separation rate: 42 mm/sec

Sealing initiation force: 5 N

Sample width: 25 mm

Specimen is sealed A to A at each sealbar temperature and seal strength (force) is determined at each step. The temperature is determined at which the seal strength reaches 5+/- 0,5 N.

**g)** Thickness

Thickness of the films was determined according to ASTM D6988.

**h)** Melting Temperature

Data were measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C. The melting temperature ($T_m$) was determined from the second heating step.

**i)** Dart Drop Impact

Dart drop impact (DDI) was determined according to ASTM D1709 - Method A.

**j)** Tensile Modulus

Tensile modulus in machine direction (MD) was determined as 1 % secant modulus with 1 mm/min test speed and 100 mm gauge length according to ISO 527-3.

**k)** Packaging performance

The packaging trials were performed on a GEA line with the following specifications:

Machine Supplier: GEA smartpacker SX400, intermittent VFFS;
Pack Design: Pillow Pack;
Pack size (mm): Width 180 x Height 250 for empty pouch;
Content type and weight: Empty packs for sealing window/ 400 grs sweets for Hot Tack;
Packaging line speed: 170 ms;
Temperature for sealing: 130°C.

Packaging performance was rated as follows:

- no sealing:
  packages were not sealed tightly or the material was destroyed/ burned during the experiment;
- acceptable sealing:
  Sealing of packages was achieved but the number of properly sealed packages per minute was low, e.g. less than 80;
- excellent sealing:
  the number of properly sealed packages per minute was 80 or more.

### Examples

Sealant films

A comparative example (CE1) and an inventive example (IE1) have been prepared as sealant films with a thickness of 60 $\mu$m. The details of the films are summarized in Table 1, whereas the key properties of the polymers used are listed in Table 2. The outer and the inner layers each make up 20 % and the core layer makes up 60 % of the total film thickness.

Table 1: Sealant film formulations (in wt.%).

| Example | Outer layer (O) 20% | Core layer (C) 60% | Inner layer (I) 20% |
|---------|---------------------|--------------------|--------------------| 
| CE1 | 80% FM1810 20% LDPE | 80% FM1810 20% LDPE | 80% FK 1828 20% LDPE |
| IE1 | 80% FX1001 20% FK1828 | 80% FX1001 20% FK1828 | 80% FK1828 20% LDPE |

Table 2: Characteristics of the polymers used.

| Resin name | Producer | Type | MFR$_2$ (g/ 10 min) | Density (kg/m$^3$) | Melting point (°C) |
|------------|----------|------|---------------------|-------------------|-------------------| 
| Anteo FK1828 | Borouge | bimodal terpolymer 1-butene, 1-hexene, ethylene | 1.5 | 918 | 122 |
| Borshape FX1001 | Borealis | bimodal terpolymer 1-butene, 1-hexene, ethylene | 0.25 | 931 | 127 |
| Anbiq FM1810 | Borouge | bimodal copolymer 1-butene, ethylene | 1.1 | 918 | |
| LDPE FT5230 | Borealis/ Borouge | LDPE | 0.75 | 923 | |
| MFR = MFR$_2$ (190 °C/2.16 kg) | | | | | |

Processibility and film properties were evaluated on large scale blown film equipment. The 3-layer blown films were produced using an Alpine-make blown film line, the films having an O/C/I structure with the layers as shown in Table 1. Performance of the films was analyzed from 60-$\mu$m blown films produced at the below process operating conditions with die-gap of 1.8 mm, lower neck-height and blow up ratio of 2.2:1. The blown film line had the following properties as follows in Table 3.

**Table 3:** Blown film line parameters.

| Die diameters | 300 mm |
|---|---|
| Die gap | 1.8 mm |
| Blow up ratio (BUR) | 2.2:1 |
| Bubble cooling | internal bubble cooling (IBC) |
| Cooling air temperature | 22 °C |
| Corona treatment outside layer | 48 dyne/cm |

Laminates

After extrusion, the films were laminated to a 23 $\mu$m MDO PE films. The films were laminated at Henkel Corporation using adhesive LA7825 and hardener LA6230 (both supplied by Henkel), mixed at a 2:1 ratio. Lamination was done on a solvent-less laminator at a running speed of 150 m/min with an adhesive content of 1.8 g/m$^2$. The corona treatment intensity on the carrier web was 2.5 kW and on the secondary web 1.5 kW. Laminated films (Table 4, wherein e.g. CE1' is a laminated film comprising the CE1 sealant film etc.) with a thickness of about 80-90 $\mu$m were prepared. Properties of the laminates were evaluated and are depicted below.

The laminated films were evaluated for their properties. The results are summarized in Table 4. Accordingly, all parameters were improved in the inventive example when compared to the comparative example.

**Table 4:** Laminate properties.

| | CE1' | IE1' |
|---|---|---|
| **SIT (°C)** | 90.9 | 90.1 |
| **Tensile Modulus (MD 1% secant)** | 231 | 655 |
| **CoF** | 0.22 | 0.17 |
| **DDI (g)** | 363 | 372 |
| **Packaging performances at 170 ms and 130°C** | No sealing | Excellent sealing |

MDO film details:
During the MDO, the primary PE film from the blown-film line, the composition which is shown in Table 5, is heated to an orientation temperature and the heating is preferably performed utilizing multiple heated rollers. The heated film is fed into a slow drawing roll with a nip roller, which has the same rolling speed as the heated rollers. The film then enters a fast drawing roll and uniaxially stretched for 5 to 7 times faster than the slow draw roll, which effectively orients the film on a continuous basis. The oriented film is annealed by holding the film at an elevated temperature for a period of time to allow for stress relaxation. Stretching was carried out using a monodirectional stretching machine manufactured by Hosokawa Alpine AG in Augsburg/Germany. The unit consists of preheating, drawing, annealing, and cooling sections, with each set at specific temperatures to optimize the performance of the unit and produce films with the desired properties. The heating was at 105°C, the stretching was done at 117°C, annealing and cooling was done at 110°C down to 40°C. The primary film, made of LLDPE FX1002 and HDPEs MB5568 or FB5600 (all polymers can be purchased from Borealis and/or Borouge) obtained from blown film extrusion was pulled into the orientation machine, then stretched between two sets of nip rollers, where the second pair runs at higher speed than the first pair, resulting in the desired draw ration. Stretching is carried out with the respective draw ratios to reach the desired thickness of 23 microns.

**Table 5:** Composition of primary film (before stretching).

| Film Layer distribution (wt%) | 15 | 10 | 50 | 10 | 15 |
|---|---|---|---|---|---|
| FX1002 | - | 70 | 100 | 70 | - |
| MB5568 or FB5600 | 100 | 30 | - | 30 | 100 |

For all extruders, zone 1-5 were heated at 180°C, and the screen changer at 195°C.

Basic properties of the primary MDO-PE film:

Film thickness: 140 $\mu$m
Draw ratio: 1:6.5
Final stretched film thickness: 23 $\mu$m

Accordingly, the improved parameters of the films are reflected downstream to the respective laminates produced with the films of the invention.

**Claims**

1. A polyethylene based sealant film comprising an inner layer (I) and a core layer (C) and an optional outer layer (O), wherein the core layer (C) is made of a core layer composition comprising

    a) a component (AC) being a first, preferably bi- or multimodal, linear low density polyethylene, optionally comprising one or more distinct alpha-olefin comonomers, having a Mw in a range of from 190 kg/ mol to 400 kg/mol and a molecular weight distribution (MWD) in a range of from 11 to 15;
    b) a component (BC) being a second, preferably bi- or multimodal, linear low density polyethylene, optionally comprising one or more distinct alpha-olefin comonomers, having a Mw in a range of from 80 to 115 kg/mol and a MWD in a range of from 1 to 6;

    wherein component (AC) has a higher density than component (BC), and
    the component (AC) has a lower $MFR_2$ than component (BC); and
    wherein said component (AC) is present in said core layer composition in an amount of more than 50 wt.% based on the total weight of the core layer composition.

2. The polyethylene based sealant film according to claim 1, wherein the inner layer (I) is made of an inner layer composition comprising (c) a component (AI) being a third linear low density polymer of ethylene and, optionally, one or more alpha-olefin comonomer(s) having a $MFR_2$ in the range of from 0.5 to 2.0 g/10 min determined according to ISO 1133, a density in the range of from 910 to 925 kg/m$^3$ and, preferably a MWD of from 1 to 6; and
(d) a component (BI) being a fourth low density polymer of ethylene and, optionally, one or more alpha-olefin comonomer(s) having a $MFR_2$ in a range of from 0.1 to 2.5 g/10 min determined according to ISO 1133, a density in a range of from 910 to 930 kg/m$^3$ and, preferably, a MWD of from 5 to 8.

3. The polyethylene based sealant film according to claim anyone of the preceding claims, wherein the core layer composition comprises more than 70 wt.%, preferably more than 75 wt.% of component (AC) based on the total weight of said core layer composition.

4. The polyethylene based sealant film according to anyone of the preceding claims, wherein the core layer composition comprises less than 30 wt.%, preferably less than 25 wt.% of component (BC) based on the total weight of said core layer composition.

5. The polyethylene based sealant film according to anyone of the preceding claims, wherein said component (AC) has an $MFR_2$ in the range of from 0.05 to 2.0 g/10 min determined according to ISO 1133 and a density in the range of from 920 to 940 kg/m$^3$, and/or
wherein said component (BC) has an $MFR_2$ in the range of from 0.5 to 2.0 g/10 min determined according to ISO 1133 and a density in the range of from 910 to 925 kg/m$^3$.

6. The polyethylene based sealant film according to anyone of the preceding claims, wherein

    a) component (AC) is a first, preferably bi- or multimodal, terpolymer of ethylene and two distinct alpha-olefin comonomers; and/ or
    b) component (BC) is a second, preferably bi- or multimodal, terpolymer of ethylene and two distinct alpha-olefin comonomers.

7. The polyethylene based sealant film according to anyone of the preceding claims, wherein said alpha-olefin comonomer(s) optionally comprised in each of said component (AC) and component (BC) may be selected independently from 1-butene, 1-hexene and 1-octene.

8. The polyethylene based sealant film according to anyone of the preceding claims, wherein at least one, preferably both, of component (AC) and component (BC) is a terpolymer of ethylene, 1-butene and 1-hexene.

9. The polyethylene based sealant film according to anyone of the preceding claims, wherein each of said component (AC) and component (BC) may independently be a multimodal terpolymer, preferably a bimodal terpolymer.

10. The polyethylene based sealant film according to anyone of the preceding claims, wherein said component (AC) and component (BC) taken together amount to 60 to 100 wt.% of the total weight of the core layer composition.

11. The polyethylene based sealant film according to anyone of the preceding claims, wherein the thickness of said core layer (C) is in a range of from 40 to 80% based on the thickness of the total polyethylene based sealant film, and/or the polyethylene based sealant film has a total film thickness in the range of from 40 to 80 $\mu$m.

12. A laminated polyethylene film comprising a polyethylene based sealant film according to anyone of the preceding claims and a substrate film.

13. The laminated polyethylene film according to claim 12, wherein the substrate film is a polyethylene film, preferably an oriented polyethylene film, more preferably a machine direction oriented polyethylene film (MDO PE), which is preferably laminated to the core layer (C) of the polyethylene based sealant film or to the optional outer layer (O) of the polyethylene based sealant film.

14. The laminated polyethylene film according to anyone of claims 12 to 13, wherein the total film thickness of the laminated polyethylene film is in the range of from 70 to 100 $\mu$m, and/ or
wherein the laminated polyethylene film meets at least one of the following requirements:

a) having a dart drop impact (DDI) determined according to ASTM D1709 - Method A of at least 300 g, preferably of at least 365 g;
b) having a dynamic coefficient of friction (CoF) determined according to ASTM D1894 of up to 0.30, preferably up to 0.20;
c) having a seal initiation temperature (SIT) at 5 N force determined according to ASTM F2029 and ASTM F88 of less than 95 °C, preferably less than 90.5°C and preferably more than 70 °C; and
d) having a tensile modulus in machine direction (MD) determined according to ISO 527-3 in the range of from 500 to 800 MPa.

15. Use of a laminated polyethylene film according to any one of claims 12 to 14 for packaging applications.

Europäisches
Patentamt

European
Patent Office

Office européen
des brevets

# EUROPEAN SEARCH REPORT

Application Number

EP 21 19 4573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/245425 A1 (BOREALIS AG [AT]) 10 December 2020 (2020-12-10) <br> * page 3, line 3 - line 4 * <br> * page 17, line 4 - line 15 * <br> * example 2 * <br> * table 1 * <br> * claim 19 * <br> ----- | 1-15 | INV. <br> B32B27/08 <br> B32B27/18 <br> B32B27/32 <br> C08J5/18 <br> C08L23/06 <br> C08L23/08 |
| A | US 2013/167486 A1 (AARNIO MINNA [AT] ET AL) 4 July 2013 (2013-07-04) <br> * paragraph [0221] - paragraph [0223] * <br> * claim 16 * <br> ----- | 1-15 | |
| A | EP 2 944 466 A1 (BOREALIS AG [AT]) 18 November 2015 (2015-11-18) <br> * paragraph [0081] * <br> * paragraph [0121] - paragraph [0124] * <br> * claim 10 * <br> ----- | 1-15 | |

TECHNICAL FIELDS
SEARCHED      (IPC)

B32B
C08J
C08L

The present search report has been drawn up for all claims

| Place of search | Date of completion of the search | Examiner |
|---|---|---|
| The Hague | 9 February 2022 | Sanchez Perucha, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 144 528 A1**

## ANNEX TO THE EUROPEAN SEARCH REPORT
## ON EUROPEAN PATENT APPLICATION NO.

EP 21 19 4573

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2022

| Patent document cited in search report | | Publication date | Patent family member(s) | | Publication date |
|---|---|---|---|---|---|
| WO 2020245425 | A1 | 10-12-2020 | TW | 202110647 A | 16-03-2021 |
| | | | TW | 202110648 A | 16-03-2021 |
| | | | WO | 2020245425 A1 | 10-12-2020 |
| | | | WO | 2020245429 A1 | 10-12-2020 |
| US 2013167486 | A1 | 04-07-2013 | CN | 103068574 A | 24-04-2013 |
| | | | EP | 2415598 A1 | 08-02-2012 |
| | | | ES | 2455694 T3 | 16-04-2014 |
| | | | KR | 20130056896 A | 30-05-2013 |
| | | | US | 2013167486 A1 | 04-07-2013 |
| | | | WO | 2012016938 A1 | 09-02-2012 |
| EP 2944466 | A1 | 18-11-2015 | CN | 106414036 A | 15-02-2017 |
| | | | EP | 2944466 A1 | 18-11-2015 |
| | | | ES | 2656101 T3 | 23-02-2018 |
| | | | WO | 2015173199 A1 | 19-11-2015 |

EPO FORM P0459

For more details about this annex : see Official Journal of the European Patent Office, No. 12/82

**EP 4 144 528 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020207940 A
- WO 03066698 A
- WO 2016083208 A
- WO 2017055174 A
- WO 2019081611 A